# EUROPÄISCHE PATENTSCHRIFT

(11) **EP 4 566 244 B1**
(45) Veröffentlichungstag und Bekanntmachung des Hinweises auf die Patenterteilung: **05.08.2026**
(21) Anmeldenummer: 23732895.0
(22) Anmeldetag: 13.06.2023
(51) Int. Cl.: H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM, AND METHOD FOR COMMUNICATION IN A SERIAL BUS SYSTEM
STATION D'ABONNÉ D'UN SYSTÈME DE BUS SÉRIE ET PROCÉDÉ DE COMMUNICATION DANS UN SYSTÈME DE BUS SÉRIE

(30) Priorität: 01.08.2022 DE 102022207919
(43) Veröffentlichungstag der Anmeldung: 11.06.2025
(73) Patentinhaber: Robert Bosch GmbH, 70442 Stuttgart (DE)
(72) Erfinder: MUTTER, Arthur, 73765 Neuhausen (DE); HARTWICH, Florian, 72762 Reutlingen (DE)
(86) Internationale Anmeldenummer: PCT/EP2023/065742
(87) Internationale Veröffentlichungsnummer: WO 2024/027972

(56) Entgegenhaltungen:
- DE-A1- 102012 110 712
- DE-A1- 102012 224 234
- DE-A1- 102018 202 168

## Beschreibung

### Technisches Gebiet

Die vorliegende Erfindung betrifft eine Teilnehmerstation für ein serielles Bussystem und ein Verfahren zur Kommunikation in einem seriellen Bussystem, die mit hoher Datenrate sowie großer Flexibilität und großer Fehlerrobustheit arbeiten. Dabei sind unautorisierte Manipulationen an dem Betrieb einer übergeordneten technischen Anlage zu verhindern.

### Stand der Technik

Bussysteme für die Kommunikation zwischen Sensoren und Steuergeräten, beispielsweise in Fahrzeugen, sollen die Übertragung einer großen Datenmenge ermöglichen, um eine möglichst große Anzahl an Funktionen einer technischen Anlage bzw. eines Fahrzeugs gewährleisten zu können. Dabei wird oft gefordert, dass die Daten schnell vom Sender zum Empfänger zu übertragen sind. Außerdem sollen bei Bedarf auch große Datenpakete übertragbar sein.

Derzeit findet schon in vielen Serienfahrzeugen ein Bussystem Verwendung, in welchem Daten als Nachrichten zwischen Busteilnehmer ausgetauscht und für die Übertragung auf dem Bus als Rahmen im Standard ISO11898-1:2015 als CAN Protokoll-Spezifikation mit CAN FD codiert werden. Die Nachrichten werden somit zwischen den Busteilnehmern des Bussystems, wie Sensor, Steuergerät, Geber, usw., ausgetauscht und hierfür als Rahmen auf dem Bus übertragen. CAN FD wird von den meisten Herstellern im ersten Schritt mit 2Mbit/s Datenbitrate und 500kbit/s Arbitrationsbitrate im Fahrzeug eingesetzt.

DE 10 2012 224 234 A1 zeigt ein Verfahren zur Kontrolle von Daten-Frames mit redundantem Identifikator auf einem Datenbus, insbesondere einem CAN-Bus.

Der Datenbus hat einen ersten manipulierten Busteilnehmer, dem derselbe (redundante) Identifikator zugeordnet ist wie einem zweiten Busteilnehmer. Sendet der manipulierte Busteilnehmer einen Daten-Frame mit dem redundanten Identifikator, kann der zweite Busteilnehmer vor Abschluss der Übertragung dieses Daten-Frames eine weitere Übertragung des Daten-Frames auf dem Datenbus unterbinden und/oder einen Abbruch der Übertragung des Daten-Frames durch den ersten Busteilnehmer veranlassen.

Alternativ ist CAN XL verwendbar, das ein Nachfolgebussystem von CAN FD ist. Bei CAN XL sind noch größere Datenraten als bei CAN FD möglich. Zudem sind längere Nachrichten als bei CAN FD möglich. Dadurch eignet sich insbesondere CAN XL auch für Anwendungen, bei denen neben dem reinen Datentransport über den CAN-Bus auch andere Funktionen unterstützt werden, wie funktionale Sicherheit (Safety), Datensicherheit (Security) und Dienstgüte (QoS = Quality of Service). Dies sind elementare Eigenschaften, die beispielsweise in einem autonom fahrenden Fahrzeug benötigt werden.

CAN XL und CAN FD sowie Classical CAN sind kompatibel, wobei CAN XL zumindest die Fehlerrobustheit wie CAN FD und Classical CAN hat. Bei jeder der genannten CAN-Versionen können im Datenfeld (Data Field) eines Rahmens für eine über den Bus zu sendende Nachricht beliebige Werte enthalten sein.

Ein Problem kann entstehen, wenn ein Manipulator in das Datenfeld eines gültigen Rahmens (Trägerrahmen) einen zweiten gültigen CAN-Rahmen (Angriffsrahmen) einbettet.

Problematisch hieran ist, dass sowohl bei CAN FD als auch bei CAN XL Nachrichten mit unterschiedlicher Länge, also unterschiedlich vielen Bytes im Datenfeld gesendet werden können. Daher wird in einem DLC-Feld, das in einer Nachricht vor dem Datenfeld angeordnet ist, die Anzahl der Bytes des Datenfelds angegeben. Möglich ist, dass ein Empfänger aufgrund einer elektromagnetischen Störung in einem der vier Bits des DLC-Felds bei CAN FD Rahmen einen anderen Wert als den Wert sieht, der dem Code für die tatsächliche Länge des Datenfelds des Trägerrahmens entspricht, insbesondere in dem höchstwertigen Bit des DLC-Felds. Ist beim Sender dieser Fehler nicht sichtbar, bricht er das Senden des Trägerrahmens nicht ab. Dies kann dazu führen, dass der Empfänger anstelle von nur einem gültigen CAN-Rahmen stattdessen zwei gültige CAN-Rahmen sieht und empfängt, nämlich einen gültigen, aber verkürzten Trägerrahmen und einen Angriffsrahmen.

Damit kann der Empfänger durch den Angriffsrahmen manipuliert werden. Insbesondere kann der Normalbetrieb der Anlage unautorisiert verändert werden. Dies kann zu unerwünschten Ergebnissen und gegebenenfalls zu einem Sicherheitsrisiko für die übergeordnete technische Anlage führen.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, welche eine Sicherheit gegen Manipulation bieten, um auch bei hoher Datenrate, beliebigen Werten im Datenfeld und beliebiger Menge der Nutzdaten pro Rahmen neben großer Fehlerrobustheit der Kommunikation zudem einen sicheren Betrieb des Bussystems und/oder der übergeordneten technischen Anlage zu realisieren.

Die Aufgabe wird durch eine Teilnehmerstation für ein serielles Bussystem mit den Merkmalen von Anspruch 1 gelöst.

Die beschriebene Teilnehmerstation (Knoten) kann durch ihre Ausgestaltung einen vom Bus empfangenen Rahmen auf eine Manipulation hin prüfen, auch wenn die Teilnehmerstation ein Empfangsknoten ist und daher nicht der Sender des vom Bus empfangenen Rahmens war. Infolge des Prüfergebnisses kann entsprechend reagiert werden, insbesondere der Rahmen verworfen werden, um eine Manipulation der Teilnehmerstation zu verhindern. Insbesondere wird kein gültiger Rahmen irrtümlich als zwei gültige Rahmen decodiert.

Als Folge davon kann eine mit einem Schädling befallene Teilnehmerstation nicht unentdeckt Rahmen senden, die den Betrieb des Bussystems oder der übergeordneten Anlage stören und/oder zusätzliche Schäden anrichten. Somit kann die Sicherheit (Security) im Bussystem erhöht werden.

Infolgedessen kann mit der Teilnehmerstation auch bei Steigerung der Menge der Nutzdaten pro Rahmen ein Senden und Empfangen der Rahmen mit großer funktionaler Sicherheit bei großer Flexibilität im Hinblick auf aktuelle Ereignisse im Betrieb des Bussystems und mit geringer Fehlerquote gewährleistet werden.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation und/oder mindestens eine CAN XL Teilnehmerstation vorhanden ist, die Nachrichten nach dem CAN-Protokoll und/oder CAN FD Protokoll und/oder CAN XL-Protokoll senden.

Vorteilhafte weitere Ausgestaltungen der Teilnehmerstation sind in den abhängigen Ansprüchen angegeben.

Das Manipulationsprüfmodul kann ausgestaltet sein, das Prüfen des mindestens einen vorbestimmten Felds des empfangenen Rahmens zusätzlich zu einem Vergleich des empfangenen Rahmens mit einem für das Bussystem gültigen Rahmenformat auszuführen.

Möglicherweise ist das Manipulationsprüfmodul ausgestaltet, den empfangenen Rahmen zu verwerfen, nachdem die Anzahl des mindestens einen Pulses, der den zu dem vorbestimmten ersten Bitwert inversen zweiten Bitwert hat, eine vorbestimmte Obergrenze überschritten hat.

Beispielsweise ist das Manipulationsprüfmodul ausgestaltet zu prüfen, ob in einem empfangenen rezessiven Bit, das eine Zeitdauer hat, mindestens ein dominanter Puls vorkommt, der eine kürzere Zeitdauer hat als das empfangene rezessive Bit.

In einer Ausgestaltung ist das Manipulationsprüfmodul ausgestaltet zu prüfen, ob in einer Bitfolge von mindestens zwei empfangenen rezessiven Bits, die jeweils eine Zeitdauer haben, mindestens ein dominanter Puls vorkommt, der eine kürzere Zeitdauer hat als das empfangene rezessive Bit.

Denkbar ist, dass das Manipulationsprüfmodul ein erstes Zählwerk zum Zählen der Anzahl von fallenden Flanken aufweist, die vom Beginn des vorbestimmten Felds des empfangenen Rahmens bis zum Ende des vorbestimmten Felds des empfangenen Rahmens vorkommen.

Optional hat das Manipulationsprüfmodul ein zweites Zählwerk zum Zählen der Anzahl von Zeitquanta, die den inversen Bitwert haben und die vom Beginn des vorbestimmten Felds des empfangenen Rahmens bis zum Ende des vorbestimmten Felds des empfangenen Rahmens vorkommen.

In einer Ausgestaltung hat das Manipulationsprüfmodul ein zweites Zählwerk zum Zählen der Anzahl einer vorbestimmten Anzahl von aufeinanderfolgenden Zeitquanta, die den inversen Bitwert haben und die vom Beginn des vorbestimmten Felds des empfangenen Rahmens bis zum Ende des vorbestimmten Felds des empfangenen Rahmens vorkommen.

Das Manipulationsprüfmodul hat möglicherweise einen ersten Auswerteblock, der das erste Zählwerk und/oder das zweite Zählwerk aufweist.

Der erste Auswerteblock kann eine Bitzeitlogik der Kommunikationssteuereinrichtung sein.

Das Manipulationsprüfmodul hat möglicherweise einen zweiten Auswerteblock zum Auswerten, ob der Rahmen zu verwerfen ist oder nicht, wobei der zweite Auswerteblock zum Austausch von Signalen mit dem ersten Auswerteblock für die Auswertung des vorbestimmten Felds des empfangenen Rahmens ausgestaltet ist.

Der zweite Auswerteblock kann ein Bitstromprozessor der Kommunikationssteuereinrichtung sein.

Das mindestens eine vorbestimmte Feld des empfangenen Rahmens kann mindestens eines der folgenden Felder oder Bits umfassen, nämlich ein Bestätigungs-abstandshalter-Bit (ACK Delimiter) in einem Bestätigungsfeld des empfangenen Rahmens, welches auf ein Bestätigungs-Bit (ACK Slot) folgt, ein Endefeld des empfangenen Rahmens, und einen Error Delimiter des Fehlerrahmens.

Gemäß einer Option ist das Manipulationsprüfmodul ausgestaltet, die Prüfung auf dominante Pulse auszuführen, um, bei einer Integration in eine Kommunikation auf dem Bus, auf dem Bus einen vorbestimmten Ruhezustand zu erkennen, der eine vorbestimmte Anzahl von Bits mit demselben Wert hat, die sonst bei einer Kommunikation auf dem Bus nicht vorkommen kann.

Möglicherweise ist die Kommunikationssteuereinrichtung zum seriellen Erzeugen des Sendesignals zum Senden auf den Bus derart ausgestaltet, dass sich für einen Rahmen die Bitzeit des in einer ersten Kommunikationsphase auf den Bus gesendeten Signals unterscheiden kann von einer Bitzeit des in einer zweiten Kommunikationsphase gesendeten Signals.

Möglich ist, dass in einer ersten Kommunikationsphase ausgehandelt wird, welche der Teilnehmerstationen des Bussystems in einer nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 18 gelöst.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN_H und CAN_L bei der Teilnehmerstation gemäß dem ersten Ausführungsbeispiel;
Fig. 5 einen zeitlichen Verlauf einer Differenzspannung VDIFF der Bussignale CAN-XL_H und CAN-XL_L bei der Teilnehmerstation gemäß dem ersten Ausführungsbeispiel;
Fig. 6 die Aufteilung eines Bits in Zeitquanta eines von der Teilnehmerstation gemäß dem ersten Ausführungsbeispiel erstellten Rahmens, der mit den Bussignalen von Fig. 4 über den Bus des Bussystems übertragen wird;
Fig. 7 ein Beispiel für einen Teil eines Empfangssignals RxD, das die Teilnehmerstation des Bussystems gemäß dem ersten Ausführungsbeispiel aus den vom Bus empfangenen Signalen eines Rahmens über der Zeit erzeugt;
Fig. 8 einen zeitlichen Verlauf eines Zählwerts Z1, der sich bei einem ersten Zählwerk der Teilnehmerstation gemäß dem ersten Ausführungsbeispiel aufgrund des Empfangssignals von Fig. 7 ergibt; und
Fig. 9 einen zeitlichen Verlauf eines Zählwerts Z2, der sich bei einem zweiten Zählwerk der Teilnehmerstation gemäß dem ersten Ausführungsbeispiel aufgrund des Empfangssignals von Fig. 7 ergibt.

In den Figuren sind gleiche oder funktionsgleiche Elemente, sofern nichts anderes angegeben ist, mit denselben Bezugszeichen versehen.

### Beschreibung der Ausführungsbeispiele

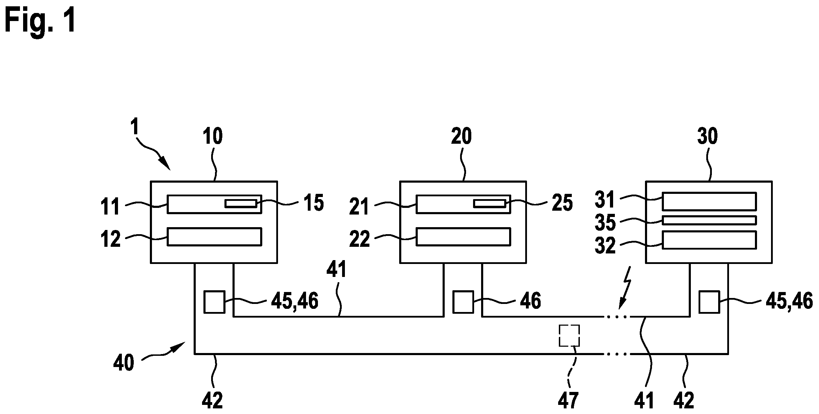

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Manipulationsprüfmodul 15. Die Teilnehmerstation 20 hat eine Kommunikationssteuereinrichtung 21 und eine Sende-/Empfangseinrichtung 22 und optional ein Manipulationsprüfmodul 25. Die Teilnehmerstation 30 hat eine Kommunikationssteuereinrichtung 31, eine Sende-/Empfangseinrichtung 32 und ein Manipulationsprüfmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist. Jede der Sende-/Empfangseinrichtungen 12, 22, 32 kann optional als separate Sendeeinrichtung und als separate Empfangseinrichtung ausgestaltet sein.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

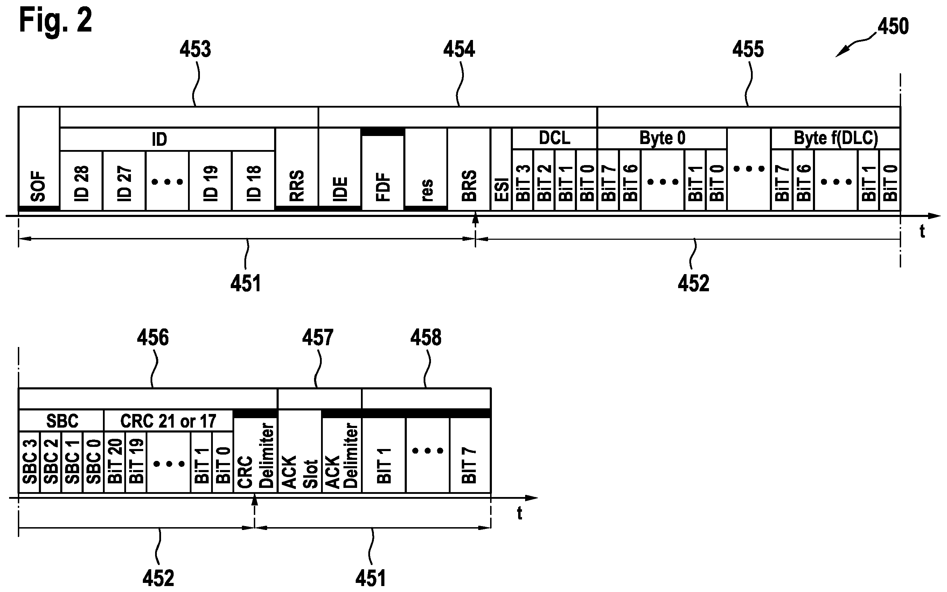

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN FD-Formats aufgebaut, das in Bezug auf Fig. 2 detaillierter beschrieben ist, und bei welchem das jeweilige Manipulationsmodul 15, 35 zum Einsatz kommt. Die Kommunikationssteuereinrichtungen 11, 31 können zudem ausgeführt sein, andere modifizierte CAN Nachrichten 46 zu erstellen und zu lesen, die beispielsweise auf der Grundlage von CAN XL aufgebaut sind. Hierbei sind die modifizierten CAN Nachrichten 46 auf der Grundlage eines CAN XL-Formats aufgebaut, das eine Weiterentwicklung von CAN FD ist und kompatibel zu CAN FD ist. Bei den CAN FD-Nachrichten 45 kann eine Anzahl von 0 bis zu 64 Datenbytes umfasst sein, die noch dazu mit einer deutlich schnelleren Datenrate als bei einer Classical CAN-Nachricht übertragen werden. Bei den CAN XL-Nachrichten 46 kann eine Anzahl von 0 bis zu insbesondere etwa 2kbyte oder einen beliebigen anderen Wert umfasst sein, die noch dazu mit einer deutlich schnelleren Datenrate als bei einer CAN FD-Nachricht 45 übertragen werden.

Die Kommunikationssteuereinrichtungen 11, 31 sind somit ausgestaltet, je nach Bedarf eine CAN FD-Nachricht 45 oder eine CAN XL-Nachricht 46 für die Sende-/Empfangseinrichtung 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN FD oder CAN XL.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest erste Nachrichten 45, beispielsweise CAN FD-Nachrichten 45. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN FD-Format oder Nachrichten 46 gemäß dem CAN XL-Format von der zugehörigen Kommunikationssteuereinrichtung 11, 31 zu empfangen oder für diese bereitzustellen.

Mit den beiden Teilnehmerstationen 10, 30 ist eine Bildung und dann Übertragung von Nachrichten 46 mit dem CAN XL-Format sowie der Empfang solcher Nachrichten 46 realisierbar.

Fig. 2 zeigt für die Nachricht 45 einen CAN FD-Rahmen 450, wie er von der Kommunikationssteuereinrichtung 11 über der Zeit t codiert und für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit Classical CAN und mit Nachfolgeversionen von CAN FD, beispielsweise mit CAN XL, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN FD-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme CRC, ein Bestätigungsfeld 457 sowie ein Ende-Feld 458. Die Bitdauer von Bits der Arbitrationsphase 451 ist länger als die Bitdauer von Bits der Datenphase 452. Der Physical Layer ist für den Rahmen 450, wie bei Classical CAN, in der Arbitrationsphase 451 und der Datenphase 452 derselbe. Der Physical Layer entspricht der Bitübertragungsschicht oder Schicht 1 des bekannten OSI-Modells (Open Systems Interconnection Modell).

Der Beginn eines Rahmens 450 (Frame) wird mit einem Bit SOF (Start of Frame) angezeigt. Anschließend sendet beispielsweise mindestens eine der Teilnehmerstationen 10, 30 einen Identifizierer (ID) in dem Arbitrationsfeld 453. Anhand dessen wird in der Arbitrationsphase 451 mit Hilfe der Bits ID28 bis Bit18 des Identifizierers (ID) in dem Arbitrationsfeld 453 bitweise zwischen den Teilnehmerstationen 10, 20, 30 ausgehandelt, welche Teilnehmerstation 10, 20, 30 derzeit die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. Am Ende des Arbitrationsfelds 453 wird ein Bit RRS gesendet.

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer (FD Transceiver nach ISO11898-2:2016) auf derzeit etwa 2 Megabit pro Sekunde im realen Fahrzeug-Einsatz. CAN XL kann diese maximale Bitrate durch, insbesondere zusätzliches, Umschalten des Physical-Layers für die Datenphase 452 noch weiter erhöhen.

In der Datenphase 452 werden für den Rahmen von Fig. 2 neben einem Teil des Steuerfelds 454 die Nutzdaten des CAN-FD-Rahmens 450 bzw. der Nachricht 45 aus dem Datenfeld 455 sowie fast das gesamte Prüfsummenfeld 456 gesendet. Das Steuerfeld 454 hat die Steuerbits IDE, FDF, res, BRS, ESI und in einem DLC-Feld die 4 Bits Bit 3 bis Bit 0. Das Prüfsummenfeld 456 hat ein SBC-Feld und ein Feld für die Prüfsumme CRC sowie das Bit CRC-Delimiter.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 2kbyte oder einen beliebigen anderen Wert.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Für eine CAN XL-Nachricht 46 verwendet die Teilnehmerstation 10 ab dem FDF-Bit in der ersten Kommunikationsphase sowie in der zweiten Kommunikationsphase, der Datenphase 452, ein CAN XL Format.

Bei dem vorliegenden Ausführungsbeispiel sind CAN XL und CAN FD kompatibel. Für CAN XL wird das von CAN FD gemäß Fig. 2 bekannte res-Bit, das bei CAN XL auch XLF-Bit genannt wird, für die Umschaltung von dem CAN FD Format zu dem CAN XL Format genutzt. Daher sind die Rahmenformate von CAN FD und CAN XL bis zum res-Bit bzw. XLF-Bit gleich. Ein Empfänger erkennt erst bei dem res-Bit bzw. XLF-Bit, in welchem Format der Rahmen 450 gesendet wird. Eine CAN XL Teilnehmerstation, also hier die Teilnehmerstationen 10, 30, unterstützt auch CAN FD.

Alternativ zu dem in Fig. 2 gezeigten Rahmen 450, bei welchem gemäß dem CAN FD Base Frame Format ein Identifizierer (Identifier) mit 11 Bit (Bit ID28 bis Bit ID18) verwendet wird, ist optional für CAN FD oder CAN XL ein Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Bei dem Rahmen 450 gemäß Fig. 2 sind Bits, die einen festen Wert haben, nämlich 0 oder 1, mit einem dicken schwarzen Strich gekennzeichnet. Bits, die an ihrer unteren Linie in Fig. 2 mit einem dicken Strich dargestellt sind, werden in dem Rahmen 450 als dominant oder ,0' gesendet. Bits, die an ihrer oberen Linie in Fig. 2 mit einem dicken Strich dargestellt sind, werden in dem Rahmen 450 als rezessiv oder ,1' gesendet. In der CAN XL Datenphase 452 können, bei Verwendung eines speziellen CAN SIC XL Transceivers, symmetrische ,1' und '0' Pegel verwendet, statt rezessiver und dominanter Pegel.

Allgemein werden bei der Erzeugung eines CAN XL Rahmens zwei unterschiedliche Stuffing-Regeln angewendet. Bis zum res Bit im Steuerfeld 454 gilt die dynamische Bit-Stuffing-Regel von CAN FD, so dass nach 5 gleichen Bits in Folge ein inverses Stuff-Bit einzufügen ist. Derartige Stuff-Bits werden auch als dynamische Stuff-Bits bezeichnet. Nach dem res-Bit im Steuerfeld 454 gilt bei CAN XL Rahmen eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In dem Rahmen 450 von Fig. 2 folgt direkt nach dem FDF-Bit das res-Bit, das von der Position her einem "XLF Bit" im CAN XL-Format entspricht, wie zuvor erwähnt. Wird das res-Bit als 1, also rezessiv, gesendet, identifiziert es damit den Rahmen 450 als CAN XL-Rahmen. Für einen CAN FD Rahmen setzt die Kommunikationssteuereinrichtung 11 das res-Bit als 0, also dominant.

Nach dem res-Bit folgt in dem Rahmen 450 das BRS-Bit, bei welchem die Bitdauer für die Arbitrationsphase 451 in die Bitdauer für die Datenphase 452 umgeschaltet wird.

An das BRS-Bit schließt sich ein DLC-Feld an, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 0 bis zur maximalen Länge des Datenfelds 455 bzw. Datenfeldlänge annehmen. Da bei CAN FD die maximale Datenfeldlänge 64 Byte beträgt, hat der Datenlängencode (DLC) eine Anzahl von 4 Bits, nämlich die Bits Bit 3 bis Bit 0. Dabei bedeutet DLC = 0 eine Datenfeldlänge mit einer Anzahl von 0 Byte und DLC = 15 bedeutet eine Datenfeldlänge mit einer Anzahl von 64 Byte Datenfeldlänge. Damit soll sichergestellt werden, dass die Empfänger des Rahmens 450 die Nutzdaten richtig empfangen und das Ende des Rahmens 450 mit den Feldern 456, 457, 458 sicher erkennen. Zudem soll dadurch der Bus 40 schnellstmöglich wieder zum Senden anderer Rahmen 450 bzw. Nachrichten 45, 46 freigegeben werden, um die Datenrate im Bussystem 1 zu maximieren. Ein Rahmen 450 blockiert den Bus 40 also nicht länger als nötig.

Nach dem DLC-Feld folgt in dem Rahmen 450 von Fig. 2 das Datenfeld 455 (Data Field). Das Datenfeld 455 besteht aus 0 bis 64 Daten-Bytes. Die Länge des Datenfelds 455 ist in dem DLC-Feld codiert, wie zuvor beschrieben.

Nach dem Datenfeld 455 folgt in dem Rahmen 450 ein SBC-Feld mit Bits SBC3 bis SBC0 und anschließend eine Prüfsumme CRC. Die Prüfsumme CRC ist eine CRC21 oder CRC17 und besteht daher aus Bit20 bis Bit0 oder Bit16 bis Bit0 für die Prüfsumme CRC. Die Länge der Prüfsumme CRC und damit des CRC Polynoms ist entsprechend der gewünschten Hamming-Distanz zu wählen. Die Prüfsumme CRC sichert den gesamten Rahmen 450 ab. Mit einem bzw. beginnend mit einem Bit CRC-Delimiter des Prüfsummenfelds 456 wird die Zeitdauer der Bits des Rahmens 450 von der Zeitdauer für die Datenphase 452 in die Zeitdauer für die Arbitrationsphase 451, in anderen Worten von kurz auf lang, umgeschaltet, wie in Fig. 2 veranschaulicht.

Nach dem Bit CRC-Delimiter und somit dem Prüfsummenfeld 456 folgt in dem Rahmen 450 das Bestätigungsfeld 457, das ein Bit ACK-Slot zur Bestätigung eines korrekten Empfangs des Rahmens 450 hat. Das ACK-Slot Bit senden die empfangenden Teilnehmerstationen 10, 30 als dominant, wenn sie den Rahmen 450 korrekt empfangen haben. Die sendende Teilnehmerstation sendet das ACK-Slot Bit als rezessiv. Daher kann das ursprünglich in dem Rahmen 450 auf den Bus 40 gesendete Bit von den empfangenden Teilnehmerstationen 10, 30 überschrieben werden. Das ACK-Delimiter Bit wird als ein rezessives Bit gesendet, welches zur Abtrennung zu anderen Feldern dient.

Nach dem Bestätigungsfeld (ACK Field) 457 folgt in dem Rahmen 450 ein Endefeld 458 (EOF = End of Frame). Die Bitsequenz Bit 1 bis Bit 7 des Endefelds 458 (EOF) dient dazu, das Ende des Rahmens 450 zu kennzeichnen. Das Endefeld (EOF) sorgt zusammen mit dem Bit ACK Delimiter dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

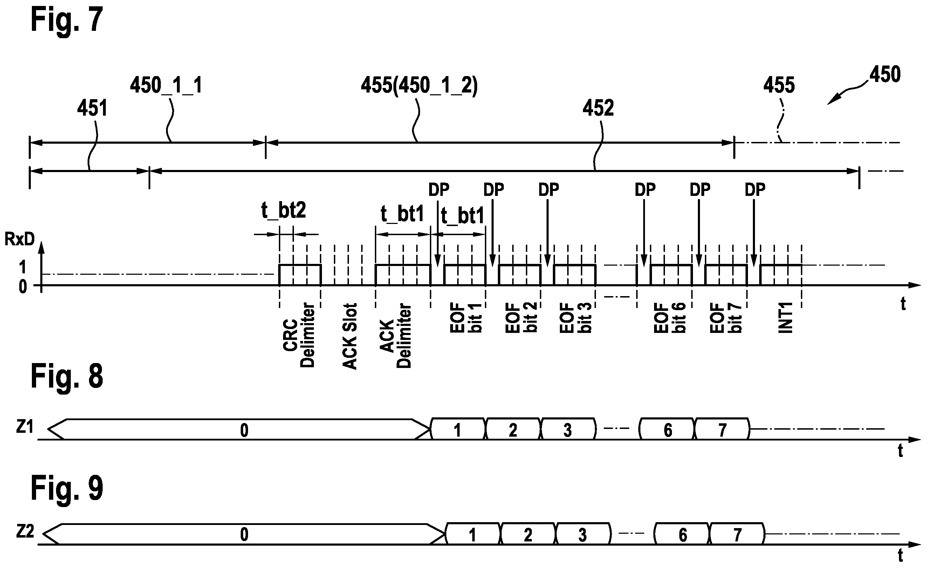

Nach dem Endefeld (EOF) folgt in dem Rahmen 450 ein Zwischenrahmenabstand INT (Intermission Field), der in Fig. 2 nicht dargestellt ist, sondern nur in Fig. 8 dargestellt ist. Der Zwischenrahmenabstand (INT) hat bei CAN minimal 3 Bits. Dieser Zwischenrahmenabstand INT ist auch bei CAN XL ausgestaltet wie bei CAN FD entsprechend der ISO11898-1:2015.

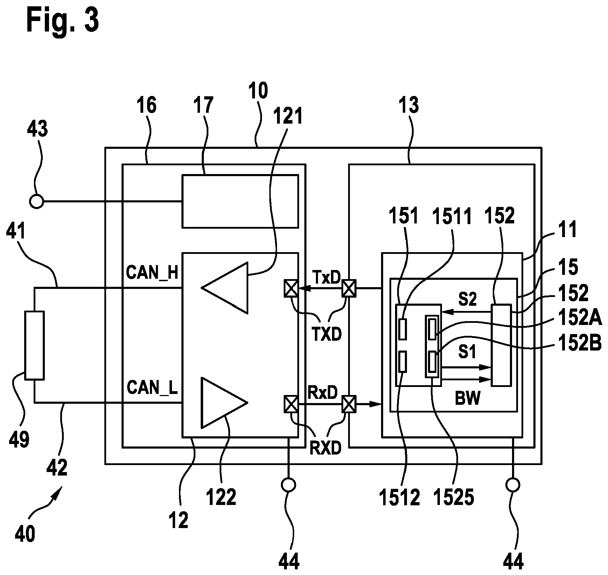

Fig. 3 zeigt den grundlegenden Aufbau der Teilnehmerstation 10 mit der Kommunikationssteuereinrichtung 11, der Sende-/Empfangseinrichtung 12 und dem Manipulationsprüfmodul 15, das bei der Teilnehmerstation 10 Teil der Kommunikationssteuereinrichtung 11 ist. Die Teilnehmerstation 30 ist in ähnlicher Weise aufgebaut, wie in Fig. 3 gezeigt, jedoch ist das Manipulationsprüfmodul 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Zwischen der Kommunikationssteuereinrichtung 11 und der Sende-/Empfangseinrichtung 12 wird über den jeweiligen Anschluss TXD das Sendesignal TxD ausgetauscht und über Anschlüsse RXD das Empfangssignal RxD ausgetauscht, wie zuvor und nachfolgend beschrieben.

Das Manipulationsprüfmodul 15 von Fig. 3 hat einen ersten Auswerteblock 151 und einen zweiten Auswerteblock 152. Der erste Auswerteblock 151 hat ein erstes Zählwerk 1511 und ein zweites Zählwerk 1512. Der zweite Auswerteblock 152 hat ein Konfigurationsregister 1525.

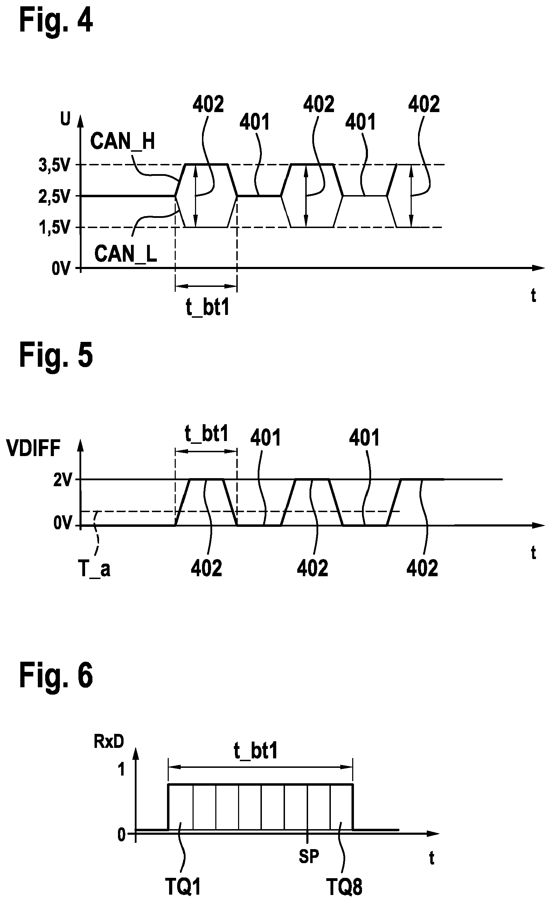

Der erste Auswerteblock 151 generiert Abtastpunkte SP (Fig. 6) für die vom Bus 40 empfangenen Signale CAN_H, CAN_L und gibt ein zugehöriges Signal S1 dazu an den zweiten Auswerteblock 152 aus. Zudem ermittelt der erste Auswerteblock 151 den Bitwert BW für das Empfangssignal RxD und gibt diesen an den zweiten Auswerteblock 152 aus. Der Bitwert BW ist 0 oder 1. Der erste Auswerteblock 151 kann die Bitzeitlogik (BTL = Bit Timing Logic) der Kommunikationssteuereinrichtung 11 oder ein Teil davon sein. Die Bitzeitlogik (BTL = Bit Timing Logic) ist ein Zustandsautomat, der ein Mal pro Zeitquantum evaluiert wird und sich auf den Bitstrom an dem Anschluss RXD der Einrichtung 11 synchronisiert. Fig. 6 zeigt ein Bit, dass beispielhaft aus 8 Zeitquanta TQ1 bis TQ8 besteht. Außerdem generiert die Bitzeitlogik (BTL = Bit Timing Logic) den Abtastpunkt SP. In dem Register 1525 sind Parameter 152A, 152B gespeichert, welche der erste Auswerteblock 151 für seine Auswertung verwendet, wie nachfolgend beschrieben.

Der zweite Auswerteblock 152 gibt ein Signal S2 an den ersten Auswerteblock 151 aus. Der zweite Auswerteblock 152 kann der Bitstrom-Prozessor (BSP = Bit Stream Processor) der Kommunikationssteuereinrichtung 11 oder ein Teil davon sein. Der Bitstrom-Prozessor (BSP = Bit Stream Processor) ist ein Zustandsautomat, der ein Mal pro CAN-Bitzeit, also entweder während der Bitdauer t_bt1 in der Arbitrationsphase 451 oder der Bitdauer t_bt2 in der Datenphase 452, evaluiert wird. Der Bitstrom-Prozessor (BSP = Bit Stream Processor) codiert und/oder decodiert den CAN-Bitstrom an den Anschlüssen TXD, RXD nach den Regeln des CAN-Protokolls.

Der zweite Auswerteblock 152, insbesondere der Bitstrom-Prozessor (BSP = Bit Stream Processor), signalisiert dem ersten Auswerteblock 151, insbesondere der Bitzeitlogik (BTL = Bit Timing Logic), mit dem Signal S2, dass der erste Auswerteblock 151 nun das Empfangssignal RxD zusätzlich bewerten soll. Das Signal S2 kann auch als Signal "Zusätzlich zu bewertendes Feld" bezeichnet werden. Sobald das Signal S2 ("Zusätzlich zu bewertendes Feld") deaktiviert wird, setzt der erste Auswerteblock 151 die Zählwerke 1511, 1512 zurück, insbesondere ihre Zählwerte auf 0.

Die Funktion des Manipulationsprüfmoduls 15 ist nachfolgend noch genauer beschrieben.

Die Sende-/Empfangseinrichtung 12 hat zudem ein Sendemodul 121 und ein Empfangsmodul 122. Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, sondern auch mit dem Empfangsmodul 122 verbunden, das auch als Receiver bezeichnet wird, auch wenn die Verbindungen in Fig. 3 zur Vereinfachung nicht gezeigt sind.

Im Betrieb des Bussystems 1 setzt das Sendemodul 121 ein Sendesignal TxD der Kommunikationssteuereinrichtung 11 in entsprechende Signale CAN_H und CAN_L für die Busadern 41, 42 um und sendet diese Signale an den Anschlüssen für CAN_H und CAN_L auf den Bus 40. Ein Beispiel für die Signale CAN_H und CAN_L ist in Fig. 4 gezeigt. Auf dem Bus 40 bildet sich ein Differenzsignal VDIFF = CAN_H - CAN_L aus, das in Fig. 5 gezeigt ist.

Das Empfangsmodul 122 von Fig. 3 bildet aus von dem Bus 40 empfangenen Signalen CAN_H und CAN_L gemäß Fig. 4 bzw. dem Differenzsignal VDIFF gemäß Fig. 5 ein Empfangssignal RxD. Wie in Fig. 3 gezeigt, gibt das Empfangsmodul 122 das Empfangssignal RxD über den Anschluss RXD der Sende-/Empfangseinrichtung 12 an den Anschluss RXD der Kommunikationssteuereinrichtung 11 weiter.

Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 oder einer Nachricht 46 ist oder nicht.

Gemäß dem Beispiel von Fig. 4 haben die Signale CAN_H und CAN_L zumindest in der Arbitrationsphase 451 die dominanten und rezessiven Buspegel 401, 402, wie von CAN bekannt. Die einzelnen Bits des Signals VDIFF mit der Bitzeit t_bt1 können mit dem Empfangsmodul 122 mit einer Empfangsschwelle T_a von beispielsweise 0,7 V in der Arbitrationsphase 451 erkannt werden, wie in Fig. 5 gezeigt. In der Datenphase 452 werden die Bits der Signale CAN_H und CAN_L schneller, also mit einer kürzeren Bitzeit t_bt2 (Fig. 7), gesendet als in der Arbitrationsphase 451, wie bereits in Bezug auf Fig. 2 erläutert. Somit unterscheiden sich die Signale CAN_H und CAN_L von Fig. 4 in der Datenphase 452 in deren schnelleren Bitrate von den herkömmlichen Signalen CAN_H und CAN_L der Arbitrationsphase 451. Sind die Signale CAN_H und CAN_L bei CAN XL in der Datenphase 452 zudem mit einem anderen Physical Layer erzeugt, wird auch in dem Empfangsmodul 122 die Empfangsschwelle umgeschaltet beispielsweise auf eine Empfangsschwelle T_d von etwa 0,0 V in der Datenphase 452.

Die Abfolge der Zustände 401, 402 für die Signale CAN_H, CAN_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt das Sendemodul 121 von Fig. 3 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40. Außerdem sendet das Sendemodul 121 von Fig. 3 für die zeitlichen Verläufe der Signale CAN_H, CAN_L in einer zweiten Betriebsart, welche die Datenphase 452 umfasst, die Bits mit einer höheren Bitrate auf den Bus 40. Wie erwähnt, können die Signale für eine CAN XL Nachricht 46 in der Datenphase 452 zudem mit einem anderen Physical Layer als bei CAN FD erzeugt werden. Dadurch kann die Bitrate in der Datenphase 452 noch weiter erhöht werden als bei CAN FD.

Das Manipulationsprüfmodul 15 von Fig. 3, insbesondere dessen Auswerteblock 151, dient zum Auswerten, ob in dem derzeit empfangenen Rahmen 450 dominante Pulse auftreten.. Die Manipulationsprüfung ist hilfreich, einen speziellen Angriff zu erkennen und zu verhindern. Bei dem Angriff sendet eine mit einem Schädling infizierte Teilnehmerstation, beispielsweise die Teilnehmerstation 30, eine Nachricht 45 mit einem speziell gewählten Inhalt im Datenfeld 452. Wenn nun ausschließlich ein Empfangsknoten, beispielsweise die Teilnehmerstation 10, einen Bitfehler im DLC-Feld des Rahmens 450 sieht, insbesondere im Bit 3 des DLC-Feldes, kann dem Empfangsknoten ein Rahmen 450 mit kürzerer Rahmenlänge vorgetäuscht werden als der Rahmen 450 tatsächlich hat. Das Manipulationsprüfmodul 15 von Fig. 3 ist insbesondere beim Empfang eines Rahmens 450 notwendig, um einen manipulierten Rahmen 450 zu erkennen.

Für die Auswertung geht das Manipulationsprüfmodul 15 vor, wie nachfolgend anhand von Fig. 6 bis Fig. 9 erläutert.

Fig. 6 zeigt für ein Bit eines von einer Teilnehmerstation 10, 20, 30 erzeugten Empfangssignals RxD eine Einteilung in Zeitquanta TQ1 bis TQ8 (Time-Quanta) wie sie von der zugehörigen Kommunikationssteuereinrichtung 11, 21, 31 angewendet wird. Ein Zeitquantum TQ1, ... , TQ8 entspricht einer Zeiteinheit, in der die Kommunikationssteuereinrichtung 11, 21, 31 das Empfangssignal RxD abtastet. Der Übersichtlichkeit halber sind in Fig. 6 nicht alle Zeitquanta TQ2 bis TQ7, die über der Zeit t zwischen den Zeitquanta TQ1 und TQ8 angeordnet sind, mit einem Bezugszeichen versehen. Die Abtastung des Bits zur Auswertung des Bitwerts 1 oder 0 erfolgt an einem Abtastpunkt SP, der üblicherweise bei etwa 75% der Bitdauer t_bt1 liegt. Für das Bit in Fig. 6 wird ein Bitwert "1" abgetastet. Die Position des Abtastpunkts SP in einem Bit kann als einer der Parameter 152A, 152B in dem Register 1525 konfiguriert und in dem Register 1525 gespeichert sein.

Das Bit von Fig. 6 ist als Beispiel ein Bit mit der Bitdauer t_bt1, die in der Arbitrationsphase 451 verwendet wird. Die Anzahl der Zeitquanta TQ1, ... , TQ8 wird von dem ersten Auswerteblock 151 festgelegt. Insbesondere ist die Anzahl der Zeitquanta TQ1, ... , TQ8 in einem Bit begrenzt durch die Vorgaben des CAN Standards frei wählbar. In anderen Worten, die Aufteilung in Zeitquanta, beispielsweise die Zeitquanta TQ1, ... , TQ8, wird von dem ersten Auswerteblock 151 vorgenommen. Die Anzahl der Zeitquanta TQ1, ... , TQ8 in einem Bit kann als einer der Parameter 152A, 152B konfiguriert und in dem Register 1525 gespeichert sein.

Dasselbe, wie in Bezug auf Fig. 6 für ein Bit der Arbitrationsphase 451 beschrieben, gilt für Bits der Datenphase 452, welche die Bitdauer t_bt2 haben, auch wenn dies in den Figuren nicht explizit dargestellt ist. Die Bitdauer t_bt1, t_bt2 kann als einer der Parameter 152A, 152B konfiguriert und in dem Register 1525 gespeichert sein.

Fig. 7 zeigt für einen Rahmen 450 einen Teil eines Empfangssignals RxD, das die Kommunikationssteuereinrichtung 11 aus den vom Bus 40 empfangenen Signalen CAN_H, CAN_L bzw. VDIFF erzeugt. Fig. 7 zeigt das Empfangssignal RxD bzw. RxD-Signal für das Datenfeld 455 eines Rahmens 450 mit speziellem Inhalt, der für einen sicherheitsrelevanten Angriff (Security-Angriff) genutzt werden kann. In diesem Datenfeld wird ein vorzeitiges Ende des Rahmens 450 vorgetäuscht. Fig. 7 zeigt das mit Hilfe von Bits der zweiten Kommunikationsphase 452 vorgetäuschte Ende, genauer, nämlich ab dem Bit CRC Delimiter am Ende des Datenfelds 455.

Fig. 7 zeigt das Ergebnis einer Bewertung eines derzeit empfangenen Rahmens 450 (Trägerrahmen). Der Rahmen 450 wird zunächst als ein erster Rahmen 450_1 mit einem vorderen Teil 450_1_1 und einem Endteil 450_1_2 bewertet, obwohl derzeit eigentlich noch das Datenfeld 455 für den derzeit empfangenen Rahmens 450 (Trägerrahmen) über den Bus 40 gesendet wird. Grund für das vorzeitig erwartete Ende des Rahmens 450 ist ein Bitfehler in einem Bit des DLC Feldes, das später genauer beschrieben wird. Das heißt, die Kommunikationssteuereinrichtung 11 empfängt zunächst aus dem Datenfeld 455 das Bit ACK (ACK Slot) und das Endefeld 458 (EOF) im eigentlichen Datenfeld 455 des derzeit empfangenen Rahmens 450 (Trägerrahmen) und bewertet dies als das Endteil 450_1_2 des derzeit empfangenen Rahmens 450 (Trägerrahmen).

Grund für das vorzeitig erwartete Ende ist, dass die empfangende Kommunikationssteuereinrichtung 11 in dem DLC-Feld einen Bitfehler gesehen hat, insbesondere im Bit 3 des DLC Feldes, so dass beispielsweise das DLC-Feld des derzeit empfangenen Rahmens 450 (Trägerrahmen) vor der Verfälschung durch dein Bitfehler einen Wert von 0xF hat, was aufgrund des Bitfehlers ein Datenfeld 455 mit einer Länge von 7 Byte ankündigt (DLC Feld = 0x7), obwohl der derzeit empfangene Rahmen 450 (Trägerrahmen) eigentlich ein Datenfeld 455 mit einer Länge von 64 Byte hat. Das heißt, die Kommunikationssteuereinrichtung 11 erwartet fälschlicherweise ein Datenfeld 455 mit nur 7 Byte. Noch dazu enthält der derzeit empfangene Rahmen 450 (Trägerrahmen) gemäß Fig. 7 ab dem 8-ten Byte im Datenfeld 455 eine Bitfolge, die einer gültigen Prüfsumme CRC entspricht, gefolgt von einem emulierten ACK Feld 457 mit den Bits ACK Slot und ACK Delimiter, einem emulierten Endefeld 458 mit den EOF-Bits 1 bis 7 (vgl. Fig. 2), einem emulierten Zwischenrahmenabstand (INT1, Intermission) und einer emulierten Bitfolge für die Arbitrationsphase 451 eines darauffolgenden Rahmens 450.

Aufgrund des dynamischen CAN Bit-Stuffing Mechanismus kann der derzeit empfangenen Rahmen 450 (Trägerrahmen) im CAN FD Datenfeld 455 keine genügend langen rezessiven Pegel oder Bitwerte darstellen, um z.B. die 8 rezessiven Bits von ACK Delimiter und des EOF-Felds 458 exakt zu emulieren. Da der Wert eines Bits nur von dem Wert des Signals RxD am Abtastpunkt (Sample Point) abhängt, ist die Kommunikationssteuereinrichtung 11 in der Lage kurze dominante Pulse DP in den vom Bus 40 empfangenen Signalen CAN_H, CAN_L bzw. VDIFF auszufiltern.

Ganz allgemein kann das Empfangsmodul 122 in einem empfangenen Bit, das einen vorbestimmten ersten Bitwert und eine vorbestimmte Zeitdauer t_bt1, t_bt2, hat, mindestens einen Puls aufweisen, der einen zu dem vorbestimmten ersten Bitwert inversen zweiten Bitwert hat.

Mit Hilfe des Moduls 15, insbesondere der Zählwerke 1511, 1512, deren Zählwerte Z1, Z2 in Fig. 8 und Fig. 9 für den Rahmen 450 von Fig. 7 gezeigt sind, kann das Auftreten der dominanten Pulse DP in einem rezessiven Bit oder von rezessiven Pulsen in einem dominanten Bit erkannt werden. Dabei kann sowohl das erste Zählwerk 1511, der auch als "fallende Flanken" Zähler bezeichnet werden kann, als auch das zweite Zählwerk 1512, der auch als "dominante Zeitquanta" Zähler bezeichnet werden kann, die dominanten Pulse DP erkennen und somit Zählen.

Beispielsweise zählt die Einrichtung 11, insbesondere das Manipulationsprüfmodul 15, mit dem ersten Zählwerk 1511 die Zahl der fallenden Flanken des RxD-Signals, also einen Wechsel des RxD-Signals von dem Bitwert 1 (Rezessiv) zu dem Bitwert 0 (Dominant) und/oder die Zahl der als Bitwert 0 (Dominant) gesehenen Zeitquanta TQ in dem RxD-Signal.

Falls der erste Auswerteblock 151, insbesondere die Bitzeitlogik (BTL = Bit Timing Logic), die Anzahl fallender Flanken oder dominanter Pulse DP erkennt, die als Obergrenze N für die Anzahl fallender Flanken oder dominanter Pulse DP konfiguriert ist, so meldet der Block 151 dem zweiten Auswerteblock 152 am nächsten Abtastpunkt SP (Fig. 6) ein dominantes empfangenes Bit (Bitwert 0) und zwar unabhängig davon, was der erste Auswerteblock 151 eigentlich am Abtastpunkt SP (Fig. 6) abgetastet hat. Der zweite Auswerteblock 152 sieht in diesem Fall einen Formatfehler für den derzeit empfangenen Rahmen 450. Die Obergrenze N für die Anzahl fallender Flanken oder dominanter Pulse DP kann in einem der Parameter 152A, 152B konfiguriert und in dem Register 1525 gespeichert sein.

In anderen Worten, überschreitet die Zahl der Flanken und/oder die Zahl der als Bitwert 0 (Dominant) gesehenen Zeitquanta TQ in dem RxD-Signal einen vorher gewählten Grenzwert, so behandelt die Einrichtung 11, insbesondere das Manipulationsprüfmodul 15, dies als einen Formatfehler. Aufgrund des Formatfehlers wird der derzeit empfangene Rahmen 450 für die Teilnehmerstation 10 (Empfänger) als ungültig bewertet oder eingestuft. Demzufolge verwirft die Teilnehmerstation 10 (Empfänger) den Rahmen 450.

Bei einem Zählerstand oder Zählwert Z1 von beispielsweise N = 2 des Zählwerks 1511, wie in Fig. 8 gezeigt, kann das Endefeld 458 (EOF) als ungültig (Formatfehler) eingestuft werden. Dadurch würde bei dem Beispiel von Fig. 7 bis Fig. 9 ein Empfang abgebrochen und die Teilnehmerstation 10 (Empfangsknoten) würde einen folgenden zweiten Rahmen (Attack-CAN-Rahmen) nicht empfangen. Stattdessen startet die Teilnehmerstation 10 (Empfangsknoten) einen Fehlerrahmen 47 (Error-Frame). Somit ist der Angriff durch den derzeit empfangenen Rahmen 450 (Trägerrahmen mit integriertem zweitem Rahmen) verhindert.

Die Einrichtung 11, insbesondere das Manipulationsprüfmodul 15, bewertet unter Verwendung des Auswerteblocks 1511 und mindestens eines der Zählwerke 1511, 1512 für einen empfangenen CAN Rahmen 450 mindestens ein vorbestimmtes Feld oder Bit, insbesondere das Bit ACK Delimiter und/oder das Feld 458 (EOF) und/oder das Feld Error Delimiter (das ist ein Teil eines Fehlerrahmens 47). Das vorbestimmte Feld oder Bit kann als einer der Parameter 152A, 152B konfiguriert und in dem Register 1525 gespeichert sein.

Beispielsweise kann die Einrichtung 11, insbesondere das Manipulationsprüfmodul 15, hierfür folgendermaßen vorgehen. Erkennt der erste Auswerteblock 151 eine Synchronisationsflanke, was einer fallenden Flanke des RxD-Signals entspricht, in einem der zuvor genannten zu bewertenden Felder des CAN Rahmens 450, meldet der Block 151 dies dem zweiten Auswerteblock 152 am nächsten Abtastpunkt SP (Sample Point, Fig. 6) über die Signale S1, BW als dominant abgetastetes Bit.

Der zweite Auswerteblock 152 führt mit den Signalen S1, BW einen Vergleich mit dem CAN-Format des Rahmens gemäß Fig. 2 durch und erkennt dadurch einen Formatfehler des derzeit empfangenen Rahmens 450.

Auf diese Weise ist ein Bitfehler in einem der Bits des DLC-Felds des Rahmens 450 sicher erkennbar im Fall eines Angriffs mit einem eingebetteten Rahmen. Dadurch kann auf sehr unaufwändige Weise insbesondere eine Manipulation abgewehrt werden, bei welcher in einem gültigen Rahmen 450 (Trägerrahmen) ein anderer gültiger Rahmen 450 enthalten ist, die empfangende Teilnehmerstation aber anstelle nur eines Rahmens 450 (Trägerrahmen) stattdessen zwei gültige Rahmen 450 erkennt.

Gemäß einem zweiten Ausführungsbeispiel geht die Einrichtung 11, insbesondere das Manipulationsprüfmodul 15, folgendermaßen vor. Beispielsweise zählt mindestens ein Zählwerk 1511, 1512 des ersten Auswerteblocks 151 anstelle von einzelnen Zeitquanta TQ Abfolgen oder Sequenzen von N aufeinanderfolgenden Zeitquanta TQ. Mit N kann somit die Auflösung eingestellt werden, d.h. ab welcher Breite eines dominanten Pulses DP ein Zählwerk 1511, 1512 zählt. Dabei ist N eine beliebige natürliche Zahl. Insbesondere kann N bei einem speziellen Beispiel eine Zahl zwischen 1 und 500 sein.

Insbesondere wird N = 3 gewählt, so dass beispielsweise der Zählwert Z1 des Zählwerks 1511 nur geändert wird, insbesondere inkrementiert oder dekrementiert, wenn 3 Zeitquanta TQ mit einem dominanten Bitwert nacheinander auftreten.

Bei dem zweiten Ausführungsbeispiel lässt sich die Robustheit gegenüber kurzen dominanten Pulsen DP erhalten. Dennoch können die oben genannten Angriffe mit einem gültigen Rahmen 450 (Trägerrahmen) abgewehrt werden, in den ein gültiger CAN Rahmen eingebettet ist. Grund dafür ist, dass der Sender des gültigen Rahmens 450 (Trägerrahmen) ausgestaltet ist, den eingebetteten Attack-CAN-Rahmen nur mit der Auflösung der Bitzeit t_bt2 der Bits der Datenphase 452 zu emulieren. Der Versand eines Rahmens 450 (Trägerrahmen), dessen Datenfeld 455 zufällig eine Bitfolge enthält, die aussieht wie ein eingebetteter Angriffs-CAN-Rahmen (Attack-CAN-Rahmen), kann auch zufällig passieren. Somit schützt die Prüfung durch das Manipulationsprüfmodul 15, 25, 35 bei absichtlich (Angriff) und unabsichtlich versendeten Trägerrahmen.

Im Übrigen sind die Module 15, 25, 35 auf die gleiche Weise aufgebaut, wie zuvor für das erste Ausführungsbeispiel beschrieben.

Gemäß einem dritten Ausführungsbeispiel hat das Manipulationsprüfmodul 15 nur ein Zählwerk, also entweder das erste Zählwerk 1511 oder das zweite Zählwerk 1512. In diesem Fall wird der Wert N = 1 als Obergrenze für den Zählwert Z1 oder Z2 gewählt, bei dem das Manipulationsprüfmodul 15 entscheidet, dass der derzeit empfangene Rahmen 450 einen Formatfehler hat und daher zu verwerfen ist. In diesem Fall meldet der erste Auswerteblock 151 schon nach einer Synchronisationsflanke ein dominantes Bit zurück.

Die Wahl N = 1 ist daher sehr vorteilhaft, da nur ein Zählwerk zu implementieren ist, das entweder die Anzahl von Synchronisationsflanken (fallende Flanke) oder die Anzahl von aufeinanderfolgenden dominanten Zeitquanta TQ1 bis TQ8 zählt. Zudem ist ein Zählwerk, das nur von 0 bis 1 zählt, sehr unaufwändig und kosteneffizient in der Umsetzung.

Im Übrigen sind die Module 15, 35 auf die gleiche Weise aufgebaut, wie zuvor für das erste Ausführungsbeispiel beschrieben.

Gemäß einem vierten Ausführungsbeispiel ist die Einrichtung 11, insbesondere das Manipulationsprüfmodul 15, ausgestaltet, die zuvor beschriebene Bewertung eines derzeit empfangenen Rahmens 450 zusätzlich während der Reintegration der Teilnehmerstation 10 in eine laufende Kommunikation am Bus 40 zu verwenden. Eine derartige Reintegration wird erforderlich, wenn die Teilnehmerstation 10 neu gestartet wird oder nach einer Ruhephase wieder aufgeweckt wird (Wake-up). Bei CAN XL Kommunikation in einem speziellen Modus, wo die Fehler-Signalisierung (Error Signaling) per Konfiguration in der Teilnehmerstation abgeschaltet wurde, wird die Reintegration sogar nach jedem erkannten Empfangsfehler verwendet.

In diesem Fall bewertet die Einrichtung 11, insbesondere das Manipulationsprüfmodul 15, mit den Blöcken 151, 152, ob sie 11 rezessive Bits in Folge auf dem CAN Bus 40 erkennt. Wird eine derartige Folge von Bits erkannt, wertet die Einrichtung 11, insbesondere das Manipulationsprüfmodul 15, dies als Ruhezustand ("Idle Condition") des Busses. Somit ist der Bus 40 frei, und die Einrichtung 11 kann selbst mit dem Senden von Nachrichten 45, 46 auf den Bus 40 beginnen.

Auf diese Weise wird ein eventuell laufender Betrieb des Bussystems 1 und der übergeordneten technischen Anlage nicht gestört. Dadurch ist die Funktion zum Abwehren einer Manipulation von zumindest Teilen des Bussystems 1 auch verwendbar, um zu einer Erhöhung der Datenrate in dem Bussystem beizutragen. Dadurch können unerwünschte Störungen und/oder eine Verminderung der Leistungsdaten des Bussystems 1 sehr unaufwändig und wirksam realisiert werden.

Im Übrigen sind die Module 15, 35 auf die gleiche Weise aufgebaut, wie zuvor für das erste oder zweite Ausführungsbeispiel beschrieben.

Gemäß einem fünften Ausführungsbeispiel ist mindestens eine der Teilnehmerstationen 10, 30 ausgestaltet, infolge einer erkannten Manipulation einen Rahmen 450 zu erzeugen und über den Bus 40 zu senden, um die anderen Teilnehmerstationen 10, 20, 30 darauf hinzuweisen, dass der soeben bzw. zuvor über den Bus 40 gesendete Rahmen 450 als manipuliert erkannt wurde.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 10BASE-T1S Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 20; 30) für ein serielles Bussystem (1), mit
einer Kommunikationssteuereinrichtung (11; 21; 31) zum Steuern einer Kommunikation der Teilnehmerstation (10; 20; 30) mit mindestens einer anderen Teilnehmerstation (10; 20; 30) des Bussystems (1) und zum Erzeugen eines Sendesignals (TxD) gemäß einem Rahmen (450),
einer Empfangseinrichtung (12; 22; 32), die zum seriellen Empfangen von mindestens einem Signal (CAN_H, CAN_L; VDIFF) von dem Bus (40) ausgestaltet ist, und gekennzeichnet mit
einem Manipulationsprüfmodul (15; 25; 35) zum Prüfen, ob mindestens ein vorbestimmtes Feld (457, 458) eines Rahmens (450; 450_1_1, 450_1_2), den die Empfangseinrichtung (12; 22; 32) aus dem mindestens einen von dem Bus (40) empfangenen Signal (CAN_H, CAN_L; VDIFF) erstellt und somit empfangen hat, in einem empfangenen Bit, das gemäß Auswertung an einem Abtastpunkt (SP) des empfangenen Bits einen vorbestimmten ersten Bitwert hat, und das eine vorbestimmte Zeitdauer (t_bt1; t_bt2) hat, mindestens einen Puls (DP) mit einem zu dem vorbestimmten ersten Bitwert inversen zweiten Bitwert aufweist,
wobei das Manipulationsprüfmodul (15; 25; 35) zudem ausgestaltet ist, falls der mindestens eine Puls (DP) erkannt wird, am nächsten Abtastpunkt (SP) den zu dem vorbestimmten ersten Bitwert inversen zweiten Bitwert als Bitwert für das empfangene Bit zu melden, unabhängig davon, was das Manipulationsprüfmodul (15; 25; 35) eigentlich am Abtastpunkt (SP) abgetastet hat, und
wobei das Manipulationsprüfmodul (15; 25; 35) zudem ausgestaltet ist, den empfangenen Rahmen (450; 450_1_1, 450_1_2) zu verwerfen, nachdem der mindestens eine Puls (DP) vorhanden ist, der den zweiten Bitwert hat, der invers zu dem vorbestimmten ersten Bitwert ist.

2. Teilnehmerstation (10; 20; 30) nach Anspruch 1, wobei das Manipulationsprüfmodul (15; 25; 35) ausgestaltet ist, das Prüfen des mindestens einen vorbestimmten Felds (457, 458) des empfangenen Rahmens (450; 450_1_1, 450_1_2) zusätzlich zu einem Vergleich des empfangenen Rahmens (450; 450_1_1, 450_1_2) mit einem für das Bussystem (1) gültigen Rahmenformat auszuführen.

3. Teilnehmerstation (10; 20; 30) nach Anspruch 1 oder 2, wobei das Manipulationsprüfmodul (15; 25; 35) ausgestaltet ist, den empfangenen Rahmen (450; 450_1_1, 450_1_2) zu verwerfen, nachdem die Anzahl des mindestens einen Pulses (DP), der den zu dem vorbestimmten ersten Bitwert inversen zweiten Bitwert hat, eine vorbestimmte Obergrenze (N) überschritten hat.

4. Teilnehmerstation (10; 20; 30) nach einem der vorangehenden Ansprüche, wobei das Manipulationsprüfmodul (15; 25; 35) ausgestaltet ist zu prüfen, ob in einem empfangenen rezessiven Bit, das eine Zeitdauer (t_bt1; t_bt2) hat, mindestens ein dominanter Puls (DP) vorkommt, der eine kürzere Zeitdauer hat als das empfangene rezessive Bit.

5. Teilnehmerstation (10; 20; 30) nach einem der vorangehenden Ansprüche, wobei das Manipulationsprüfmodul (15; 25; 35) ausgestaltet ist zu prüfen, ob in einer Bitfolge von mindestens zwei empfangenen rezessiven Bits, die jeweils eine Zeitdauer (t_bt1; t_bt2) haben, mindestens ein dominanter Puls (DP) vorkommt, der eine kürzere Zeitdauer hat als das empfangene rezessive Bit.

6. Teilnehmerstation (10; 20; 30) nach einem der vorangehenden Ansprüche, wobei das Manipulationsprüfmodul (15; 25; 35) ein erstes Zählwerk (1511) zum Zählen der Anzahl von fallenden Flanken aufweist, die vom Beginn des vorbestimmten Felds (457, 458) des empfangenen Rahmens (450; 450_1_1, 450_1_2) bis zum Ende des vorbestimmten Felds (457, 458) des empfangenen Rahmens (450; 450_1_1, 450_1_2) vorkommen.

7. Teilnehmerstation (10; 20; 30) nach einem der vorangehenden Ansprüche, wobei das Manipulationsprüfmodul (15; 25; 35) ein zweites Zählwerk (1512) zum Zählen der Anzahl von Zeitquanta (TQ) aufweist, die den inversen Bitwert haben und die vom Beginn des vorbestimmten Felds (457, 458) des empfangenen Rahmens (450; 450_1_1, 450_1_2) bis zum Ende des vorbestimmten Felds (457, 458) des empfangenen Rahmens (450; 450_1_1, 450_1_2) vorkommen.

8. Teilnehmerstation (10; 20; 30) nach einem der vorangehenden Ansprüche, wobei das Manipulationsprüfmodul (15; 25; 35) ein zweites Zählwerk (1512) zum Zählen der Anzahl einer vorbestimmten Anzahl von aufeinanderfolgenden Zeitquanta (TQ) aufweist, die den inversen Bitwert haben und die vom Beginn des vorbestimmten Felds (457, 458) des empfangenen Rahmens (450; 450_1_1, 450_1_2) bis zum Ende des vorbestimmten Felds (457, 458) des empfangenen Rahmens (450; 450_1_1, 450_1_2) vorkommen.

9. Teilnehmerstation (10; 20; 30) nach einem der Ansprüche 6 bis 8, wobei das Manipulationsprüfmodul (15; 25; 35) einen ersten Auswerteblock (151) aufweist, der das erste Zählwerk (1511) und/oder das zweite Zählwerk (1512) aufweist.

10. Teilnehmerstation (10; 20; 30) nach Anspruch 9, wobei der erste Auswerteblock (151) eine Bitzeitlogik der Kommunikationssteuereinrichtung (11) ist.

11. Teilnehmerstation (10; 20; 30) nach Anspruch 9 oder 10,
wobei das Manipulationsprüfmodul (15; 25; 35) einen zweiten Auswerteblock (152) aufweist zum Auswerten, ob der Rahmen (450; 450_1) zu verwerfen ist oder nicht, und
wobei der zweite Auswerteblock (152) zum Austausch von Signalen (S1, S2, BW) mit dem ersten Auswerteblock (151) für die Auswertung des vorbestimmten Felds (457, 458) des empfangenen Rahmens (450; 450_1_1, 450_1_2) ausgestaltet ist.

12. Teilnehmerstation (10; 20; 30) nach Anspruch 11, wobei der zweite Auswerteblock (152) ein Bitstromprozessor der Kommunikationssteuereinrichtung (11) ist.

13. Teilnehmerstation (10; 20; 30) nach einem der vorangehenden Ansprüche, wobei das mindestens eine vorbestimmte Feld (457, 458) des empfangenen Rahmens (450; 450_1_1, 450_1_2) mindestens eines der folgenden Felder oder Bits umfasst, nämlich ein Bestätigungs-Abstandshalter-Bit (ACK Delimiter) in einem Bestätigungsfeld (457) des empfangenen Rahmens (450; 450_1_1, 450_1_2), welches auf ein Bestätigungs-Bit (ACK Slot) folgt, ein Endefeld (458) des empfangenen Rahmens (450; 450_1_1, 450_1_2), und einen Error Delimiter des Fehlerrahmens (47).

14. Teilnehmerstation (10; 20; 30) nach einem der vorangehenden Ansprüche, wobei das Manipulationsprüfmodul (15; 25; 35) ausgestaltet ist, die Prüfung auf dominante Pulse (DP) auszuführen, um, bei einer Integration in eine Kommunikation auf dem Bus (40), auf dem Bus (40) einen vorbestimmten Ruhezustand zu erkennen, der eine vorbestimmte Anzahl von Bits mit dem selben Wert hat, die sonst bei einer Kommunikation auf dem Bus (40) nicht vorkommen kann.

15. Teilnehmerstation (10; 20; 30) nach einem der vorangehenden Ansprüche, wobei die Kommunikationssteuereinrichtung (11; 21; 31) zum seriellen Erzeugen des Sendesignals (TxD) zum Senden auf den Bus (40) derart ausgestaltet ist, dass sich für den Rahmen (450) die Bitzeit (t_bt1) des in einer ersten Kommunikationsphase (451) auf den Bus (40) gesendeten Signals unterscheiden kann von einer Bitzeit (t_bt2) des in einer zweiten Kommunikationsphase (452) gesendeten Signals.

16. Teilnehmerstation (10; 20; 30) nach einem der vorangehenden Ansprüche,
wobei in einer ersten Kommunikationsphase (451) ausgehandelt wird, welche der Teilnehmerstationen (10, 20, 30) des Bussystems (1) in einer nachfolgenden zweiten Kommunikationsphase (452) einen zumindest zeitweise exklusiven, kollisionsfreien Zugriff auf den Bus (40) bekommt.

17. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 20; 30) eine Teilnehmerstation (10; 20; 30) nach einem der vorangehenden Ansprüche ist.

18. Verfahren zur Kommunikation in einem seriellen Bussystem (1), wobei das Verfahren mit einer Teilnehmerstation (10; 20; 30) des Bussystems (1) ausgeführt wird, die eine Kommunikationssteuereinrichtung (11; 12; 31), eine Empfangseinrichtung (12; 22; 32) und ein Manipulationsprüfmodul (15; 25; 35) aufweist, wobei das Verfahren die Schritte aufweist,
Steuern, mit der Kommunikationssteuereinrichtung (11; 21; 31), einer Kommunikation der Teilnehmerstation (10; 20; 30) mit mindestens einer anderen Teilnehmerstation (10; 20; 30) des Bussystems (1), wobei die Kommunikationssteuereinrichtung (11; 21; 31) zum Erzeugen eines Sendesignals (TxD) gemäß einem Rahmen (450) ausgestaltet ist,
seriell Empfangen, mit der Empfangseinrichtung (12; 22; 32), von mindestens einem Signal (CAN_H, CAN_L; VDIFF) von dem Bus (40) des Bussystems (1),
**gekennzeichnet durch** Prüfen, mit dem Manipulationsprüfmodul (15; 25; 35), ob mindestens ein vorbestimmtes Feld (457, 458) eines Rahmens (450; 450_1_1, 450_1_2), den die Empfangseinrichtung (12; 22; 32) aus dem mindestens einen von dem Bus (40) empfangenen Signal (CAN_H, CAN_L; VDIFF) erstellt und somit empfangen hat, in einem empfangenen Bit, das gemäß Auswertung an einem Abtastpunkt (SP) des empfangenen Bits einen vorbestimmten ersten Bitwert hat, und das eine vorbestimmte Zeitdauer (t_bt1; t_bt2) hat, mindestens einen Puls (DP) mit einem zu dem vorbestimmten ersten Bitwert inversen zweiten Bitwert aufweist,
wobei das Manipulationsprüfmodul (15; 25; 35) zudem, falls der mindestens eine Puls (DP) erkannt wird, am nächsten Abtastpunkt (SP) den zu dem vorbestimmten ersten Bitwert inversen zweiten Bitwert als Bitwert für das empfangene Bit meldet, unabhängig davon, was das Manipulationsprüfmodul (15; 25; 35) eigentlich am Abtastpunkt (SP) abgetastet hat, und
wobei das Manipulationsprüfmodul (15; 25; 35) zudem ausgestaltet ist, den empfangenen Rahmen (450; 450_1_1, 450_1_2) zu verwerfen, nachdem der mindestens eine Puls (DP) vorhanden ist, der den zweiten Bitwert hat, der invers zu dem vorbestimmten ersten Bitwert ist.

## Claims

1. Subscriber station (10; 20; 30) for a serial bus system (1), having:
a communication control device (11; 21; 31) for controlling a communication of the subscriber station (10; 20; 30) with at least one other subscriber station (10; 20; 30) of the bus system (1) and for generating a transmission signal (TxD) according to a data frame (450);
a receiver device (12; 22; 32), which device is configured for the serial reception of at least one signal (CAN_H, CAN_L; VDIFF) on the bus (40), **characterized by**:
a manipulation check module (15; 25; 35) for checking as to whether at least one predetermined field (457, 458) of a data frame (450; 450_1_1, 450_1_2), which frame is generated by the receiver device (12; 22; 32) from the at least one signal (CAN_H, CAN_L; VDIFF) received on the bus (40), and is thus received thereby, in a received bit, which bit, according to an evaluation executed at a sample point (SP) of the received bit, assumes a predetermined first bit value, and which assumes a predetermined duration (t_bt1; t_bt2), comprises at least one pulse (DP) having a second bit value which is inverse to the predetermined first bit value;
wherein the manipulation check module (15; 25; 35) is moreover configured, in the event that the at least one pulse (DP) is detected, at the next sample point (SP), to signal, by way of a bit value for the bit thus received, the inverse second bit value to the predetermined first bit value, independently of the actual outcome of sampling by the manipulation check module (15; 25; 35) at the sample point (SP); and
wherein the manipulation check module (15; 25; 35) is moreover configured to discard the data frame received (450; 450_1 _1, 450_1 _2), once the at least one pulse (DP) is present, which pulse assumes the inverse second bit value to the predetermined first bit value.

2. Subscriber station (10; 20; 30) according to Claim 1, wherein the manipulation check module (15; 25; 35) is configured to execute a check of the at least one predetermined field (457, 458) of the data frame received (450; 450_1_1, 450_1_2), additionally to a comparison of the data frame received (450; 450_1 _1, 450_1 _2) with a valid frame format for the bus system (1).

3. Subscriber station (10; 20; 30) according to Claim 1 or 2, wherein the manipulation check module (15; 25; 35) is configured to discard the data frame received (450; 450_1 _1, 450_1 _2), once the number count of the at least one pulse (DP), which pulse assumes the inverse second bit value to the predetermined first bit value, has exceeded a predetermined upper limit (N).

4. Subscriber station (10; 20; 30) according to one of the preceding claims, wherein the manipulation check module (15; 25; 35) is configured to execute a check as to whether, in a recessive bit received, which bit assumes a duration (t_bt1; t_bt2), at least one dominant pulse (DP) occurs, which pulse assumes a shorter duration than the recessive bit received.

5. Subscriber station (10; 20; 30) according to one of the preceding claims, wherein the manipulation check module (15; 25; 35) is configured to execute a check as to whether, in a bit sequence of at least two recessive bits received, each of which assumes a duration (t_bt1; t_bt2), at least one dominant pulse (DP) occurs, which pulse assumes a shorter duration than the recessive bit received.

6. Subscriber station (10; 20; 30) according to one of the preceding claims, wherein the manipulation check module (15; 25; 35) comprises a first register (1511) for counting the number of falling edges, which edges occur between the start of the predetermined field (457, 458) of the data frame received (450; 450_1_1, 450_1_2) and the end of the predetermined field (457, 458) of the data frame received (450; 450_1_1, 450_1_2).

7. Subscriber station (10; 20; 30) according to one of the preceding claims, wherein the manipulation check module (15; 25; 35) comprises a second register (1512) for counting the number of time quanta (TQ) which assume the inverse bit value and which occur between the start of the predetermined field (457, 458) of the data frame received (450; 450_1_1, 450_1_2) and the end of the predetermined field (457, 458) of the data frame received (450; 450_1_1, 450_1_2).

8. Subscriber station (10; 20; 30) according to one of the preceding claims, wherein the manipulation check module (15; 25; 35) comprises a second register (1512) for the numerical counting of a predetermined number of sequential time quanta (TQ), which time quanta assume the inverse bit value and occur between the start of the predetermined field (457, 458) of the data frame received (450; 450_1 _1, 450_1_2) and the end of the predetermined field (457, 458) of the data frame received (450; 450_1_1, 450_1_2).

9. Subscriber station (10; 20; 30) according to one of Claims 6 to 8, wherein the manipulation check module (15; 25; 35) comprises a first evaluation unit (151), which unit comprises the first register (1511) and/or the second register (1512).

10. Subscriber station (10; 20; 30) according to Claim 9, wherein the first evaluation unit (151) is a bit timing logic of the communication control device (11).

11. Subscriber station (10; 20; 30) according to Claim 9 or 10,
wherein the manipulation check module (15; 25; 35) comprises a second evaluation unit (152), for evaluation as to whether the data frame (450; 450_1) is to be discarded or otherwise; and
wherein the second evaluation unit (152) is configured to exchange signals (S1, S2, BW) with the first evaluation unit (151), for the evaluation of the predetermined field (457, 458) of the data frame received (450; 450_1_1, 450_1_2).

12. Subscriber station (10; 20; 30) according to Claim 11, wherein the second evaluation unit (152) is a bitstream processor of the communication control device (11).

13. Subscriber station (10; 20; 30) according to one of the preceding claims, wherein the at least one predetermined field (457, 458) of the data frame received (450; 450_1 _1, 450_1_2) comprises at least one of the following fields or bits, namely, an acknowledgement delimiter bit (ACK Delimiter) in an acknowledgement field (457) of the data frame received (450; 450_1_1, 450_1_2), which bit follows an acknowledgement bit (ACK Slot), an end-of-frame field (458) of the data frame received (450; 450_1 _1, 450_1 _2), and an error delimiter of the error frame (47).

14. Subscriber station (10; 20; 30) according to one of the preceding claims, wherein the manipulation check module (15; 25; 35) is configured to execute a check for dominant pulses (DP), in order to enable the detection, in case of integration in a communication on the bus (40), of a predetermined idle state on the bus (40), in which state a predetermined number of bits having the same value are assumed, which number of bits cannot otherwise occur in a communication on the bus (40).

15. Subscriber station (10; 20; 30) according to one of the preceding claims, wherein the communication control device (11; 21; 31) is configured for the serial generation of the transmission signal (TxD) for transmission on the bus (40) such that, for the data frame (450), the bit time (t_bt1) of the signal transmitted on the bus (40) in a first communication phase (451) can be distinguished from a bit time (t_bt2) of the signal transmitted in a second communication phase (452).

16. Subscriber station (10; 20; 30) according to one of preceding claims,
wherein, in a first communication phase (451), a negotiation is executed as to which of the subscriber stations (10; 20; 30) of the bus system (1), in a subsequent second communication phase (452), is to enjoy an at least intermittently exclusive and collision-free access to the bus (40).

17. Bus system (1), having
a bus (40), and
at least two subscriber stations (10; 20; 30), which stations are interconnected by means of the bus (40) such that a mutual serial communication thereof is enabled, and of which at least one subscriber station (10; 20; 30) is a subscriber station (10; 20; 30) according to one of the preceding claims.

18. Method for communication in a serial bus system (1), wherein the method is executed by means of a subscriber station (10; 20; 30) of the bus system (1), which station comprises a communication control device (11; 12; 31), a receiver device (12; 22; 32) and a manipulation check module (15; 25; 35), wherein the method comprises the following steps:
control, by means of the communication control device (11; 21; 31), of a communication of the subscriber station (10; 20; 30) with at least one other subscriber station (10; 20; 30) of the bus system (1), wherein the communication control device (11; 21; 31) is configured for generating a transmission signal (TxD) according to a data frame (450);
serial reception, by means of the receiver device (12; 22; 32), of at least one signal (CAN_H, CAN_L; VDIFF) on the bus (40) of the bus system (1),
**characterized by** a check,
by means of the manipulation check module (15; 25; 35), as to whether at least one predetermined field (457, 458) of a data frame (450; 450_1 _1, 450_1_2), which frame is generated by the receiver device (12; 22; 32) from the at least one signal (CAN_H, CAN_L; VDIFF) received on the bus (40), and is thus received thereby, in a received bit, which bit, according to an evaluation executed at a sample point (SP) of the received bit, assumes a predetermined first bit value, and which assumes a predetermined duration (t_bt1; t_bt2), comprises at least one pulse (DP) having a second bit value which is inverse to the predetermined first bit value,
wherein the manipulation check module (15; 25; 35) is moreover configured, in the event that the at least one pulse (DP) is detected, at the next sample point (SP), to signal, by way of a bit value for the bit thus received, the inverse second bit value to the predetermined first bit value, independently of the actual outcome of sampling by the manipulation check module (15; 25; 35) at the sample point (SP); and
wherein the manipulation check module (15; 25; 35) is moreover configured to discard the data frame received (450; 450_1 _1, 450_1_2), once the at least one pulse (DP) is present, which pulse assumes the inverse second bit value to the predetermined first bit value.

## Revendications

1. Station d'abonné (10 ; 20 ; 30) pour un système de bus série (1), comprenant un dispositif (11 ; 21 ; 31) de commande de communication destiné à commander une communication de la station d'abonné (10 ; 20 ; 30) avec au moins une autre station d'abonné (10 ; 20 ; 30) du système de bus (1) et à générer un signal d'émission (TxD) en fonction d'une trame (450),
un dispositif de réception (12 ; 22 ; 32) conçu pour recevoir en série au moins un signal (CAN_H, CAN_L ; VDIFF) en provenance du bus (40), et **caractérisé par**
un module de vérification de manipulation (15 ; 25 ; 35) destiné à vérifier si au moins un champ prédéterminé (457, 458) d'une trame (450 ; 450_1_1, 450_1_2) que le dispositif de réception (12 ; 22 ; 32) a créée à partir d'au moins un signal (CAN_H, CAN_L ; VDIFF) reçu du bus (40) et a donc reçue, présente, dans un bit reçu qui, en fonction de l'évaluation, a une première valeur de bit prédéterminée en un point d'échantillonnage (SP) du bit reçu et qui a une durée prédéterminée (t_bt1 ; t_bt2), au moins une impulsion (DP) ayant une deuxième valeur de bit inverse de la première valeur de bit prédéterminée,
le module de vérification de manipulation (15 ; 25 ; 35) étant en outre conçu, si l'au moins une impulsion (DP) est détectée, pour signaler, au point d'échantillonnage suivant (SP), la deuxième valeur de bit inverse de la première valeur de bit prédéterminée comme valeur de bit pour le bit reçu, indépendamment de ce que le module de vérification de manipulation (15 ; 25 ; 35) a effectivement échantillonné au point d'échantillonnage (SP), et
le module de vérification de manipulation (15 ; 25 ; 35) étant en outre conçu pour rejeter la trame reçue (450 ; 450_1_1, 450_1_2) après la présence de l'au moins une impulsion (DP) ayant la deuxième valeur de bit qui est l'inverse de la première valeur de bit prédéterminée.

2. Station d'abonné (10 ; 20 ; 30) selon la revendication 1, dans laquelle le module de vérification de manipulation (15 ; 25 ; 35) est conçu pour effectuer la vérification de l'au moins un champ prédéterminé (457, 458) de la trame reçue (450 ; 450_1_1, 450_1_2) en plus d'une comparaison de la trame reçue (450 ; 450_1_1, 450_1_2) avec un format de trame valide pour le système de bus (1).

3. Station d'abonné (10 ; 20 ; 30) selon la revendication 1 ou 2, dans laquelle le module de vérification de manipulation (15 ; 25 ; 35) est conçu pour rejeter la trame reçue (450 ; 450_1_1, 450_1_2) après que le nombre de l'au moins une impulsion (DP) ayant la deuxième valeur de bit inverse de la première valeur de bit prédéterminée a dépassé une limite supérieure (N) prédéterminée.

4. Station d'abonné (10 ; 20 ; 30) selon l'une des revendications précédentes, dans laquelle le module de vérification de manipulation (15 ; 25 ; 35) est conçu pour vérifier si, dans un bit récessif reçu qui a une durée (t_bt1 ; t_bt2), il se produit au moins une impulsion dominante (DP) qui a une durée plus courte que le bit récessif reçu.

5. Station d'abonné (10 ; 20 ; 30) selon l'une des revendications précédentes, dans laquelle le module de vérification de manipulation (15 ; 25 ; 35) est conçu pour vérifier si, dans une séquence de bits d'au moins deux bits récessifs reçus qui ont respectivement une durée (t_bt1; t_bt2), il se produit au moins une impulsion dominante (DP) qui a une durée plus courte que le bit récessif reçu.

6. Station d'abonné (10 ; 20 ; 30) selon l'une des revendications précédentes, dans laquelle le module de vérification de manipulation (15 ; 25 ; 35) comporte un premier compteur (1511) destiné à compter le nombre de fronts descendants qui se produisent depuis le début du champ prédéterminé (457, 458) de la trame reçue (450 ; 450_1_1, 450_1_2) jusqu'à la fin du champ prédéterminé (457, 458) de la trame reçue (450 ; 450_1_1, 450_1_2).

7. Station d'abonné (10 ; 20 ; 30) selon l'une des revendications précédentes, dans laquelle le module de vérification de manipulation (15 ; 25 ; 35) comporte un deuxième compteur (1512) destiné à compter le nombre de quanta de temps (TQ) qui ont la valeur de bit inverse et qui se produisent depuis le début du champ prédéterminé (457, 458) de la trame reçue (450 ; 450_1_1, 450_1_2) jusqu'à la fin du champ prédéterminé (457, 458) de la trame reçue (450 ; 450_1_1, 450_1_2).

8. Station d'abonné (10 ; 20 ; 30) selon l'une des revendications précédentes, dans laquelle le module de vérification de manipulation (15 ; 25 ; 35) comporte un deuxième compteur (1512) destiné à compter le nombre d'un nombre prédéterminé de quanta de temps successifs (TQ) qui ont la valeur de bit inverse et qui se produisent depuis le début du champ prédéterminé (457, 458) de la trame reçue (450 ; 450_1_1, 450_1_2) jusqu'à la fin du champ prédéterminé (457, 458) de la trame reçue (450 ; 450_1_1, 450_1_2).

9. Station d'abonné (10 ; 20 ; 30) selon l'une des revendications 6 à 8, dans laquelle le module de vérification de manipulation (15 ; 25 ; 35) comporte un premier bloc d'évaluation (151) qui comporte le premier compteur (1511) et/ou le deuxième compteur (1512).

10. Station d'abonné (10 ; 20 ; 30) selon la revendication 9, dans laquelle le premier bloc d'évaluation (151) est une logique de temps de bit du dispositif de commande de communication (11).

11. Station d'abonné (10 ; 20 ; 30) selon la revendication 9 ou 10,
le module de vérification de manipulation (15 ; 25 ; 35) comportant un deuxième bloc d'évaluation (152) pour évaluer si la trame (450 ; 450_1) doit être rejetée ou non, et
le deuxième bloc d'évaluation (152) étant conçu pour échanger des signaux (S1, S2, BW) avec le premier bloc d'évaluation (151) pour l'évaluation du champ prédéterminé (457, 458) de la trame reçue (450 ; 450_1_1, 450_1_2).

12. Station d'abonné (10 ; 20 ; 30) selon la revendication 11, dans laquelle le deuxième bloc d'évaluation (152) est un processeur de flux binaire du dispositif de commande de communication (11).

13. Station d'abonné (10 ; 20 ; 30) selon l'une des revendications précédentes, dans laquelle l'au moins un champ prédéterminé (457, 458) de la trame reçue (450 ; 450_1_1, 450_1_2) comprend au moins l'un des champs ou bits suivants, à savoir un bit d'espacement d'accusé de réception (ACK Delimiter) dans un champ d'accusé de réception (457) de la trame reçue (450 ; 450_1_1, 450_1_2), lequel suit un bit d'accusé de réception (ACK Slot), un champ de fin (458) de la trame reçue (450 ; 450_1_1, 450_1 _2), et un délimiteur d'erreur de la trame d'erreur (47).

14. Station d'abonné (10 ; 20 ; 30) selon l'une des revendications précédentes, dans laquelle le module de vérification de manipulation (15 ; 25 ; 35) est conçu pour effectuer la vérification d'impulsions dominantes (DP) afin, lors d'une intégration dans une communication sur le bus (40), de détecter sur le bus (40) un état de repos prédéterminé qui présente un nombre prédéterminé de bits ayant la même valeur, lequel ne peut autrement pas se produire lors d'une communication sur le bus (40).

15. Station d'abonné (10 ; 20 ; 30) selon l'une des revendications précédentes, dans laquelle le dispositif (11 ; 21 ; 31) de commande de communication est conçu pour générer en série le signal d'émission (TxD) afin de l'émettre sur le bus (40), de telle sorte que, pour la trame (450), le temps de bit (t_bt1) du signal émis sur le bus (40) dans une première phase de communication (451) peut différer d'un temps de bit (t_bt2) du signal émis dans une deuxième phase de communication (452).

16. Station d'abonné (10 ; 20 ; 30) selon l'une des revendications précédentes, celle des stations d'abonné (10, 20, 30) du système de bus (1) qui obtient, dans une deuxième phase de communication (452) qui suit, un accès au bus (40) au moins temporairement exclusif, sans collision, étant négociée dans une première phase de communication (451).

17. Système de bus (1), comprenant
un bus (40), et
au moins deux stations d'abonnés (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 20 ; 30) est une station d'abonné (10 ; 20 ; 30) selon l'une des revendications précédentes.

18. Procédé de communication dans un système de bus série (1), le procédé étant mis en œuvre au moyen d'une station d'abonné (10 ; 20 ; 30) du système de bus (1), qui comprend un dispositif (11 ; 12 ; 31) de commande de communication, un dispositif de réception (12 ; 22 ; 32) et un module de vérification de manipulation (15 ; 25 ; 35), le procédé comprenant les étapes suivantes :
commander, au moyen du dispositif (11 ; 21 ; 31) de commande de communication, une communication de la station d'abonné (10 ; 20 ; 30) avec au moins une autre station d'abonné (10 ; 20 ; 30) du système de bus (1), le dispositif (11 ; 21 ; 31) de commande de communication étant conçu pour générer un signal d'émission (TxD) en fonction d'une trame (450),
recevoir en série, au moyen du dispositif de réception (12 ; 22 ; 32), au moins un signal (CAN_H, CAN_L ; VDIFF) en provenance du bus (40) du système de bus (1),
**caractérisé par** le fait de vérifier, au moyen du module de vérification de manipulation (15 ; 25 ; 35), si au moins un champ prédéterminé (457, 458) d'une trame (450 ; 450_1_1, 450_1_2) que le dispositif de réception (12 ; 22 ; 32) a créée à partir de l'au moins un signal (CAN_H, CAN_L ; VDIFF) reçu du bus (40) et a ainsi reçue, présente, dans un bit reçu qui, en fonction de l'évaluation, a une première valeur de bit prédéterminée en un point d'échantillonnage (SP) du bit reçu et qui a une durée prédéterminée (t_bt1 ; t_bt2), au moins une impulsion (DP) ayant une deuxième valeur de bit inverse de la première valeur de bit prédéterminée,
le module de vérification de manipulation (15 ; 25 ; 35) signalant en outre, si l'au moins une impulsion (DP) est détectée, au point d'échantillonnage suivant (SP), la deuxième valeur de bit inverse de la première valeur de bit prédéterminée comme valeur de bit pour le bit reçu, indépendamment de ce que le module de vérification de manipulation (15 ; 25 ; 35) a effectivement échantillonné au point d'échantillonnage (SP), et
le module de vérification de manipulation (15 ; 25 ; 35) étant en outre conçu pour rejeter la trame reçue (450 ; 450_1_1, 450_1_2) après la présence de l'au moins une impulsion (DP) ayant la deuxième valeur de bit qui est l'inverse de la première valeur de bit prédéterminée.
